(19) Europäisches Patentamt
European Patent Office
Office européen des brevets

(11) EP 3 046 886 B1

(12) EUROPÄISCHE PATENTSCHRIFT

(45) Veröffentlichungstag und Bekanntmachung des Hinweises auf die Patenterteilung:
**22.05.2019 Patentblatt 2019/21**

(21) Anmeldenummer: **14767020.2**

(22) Anmeldetag: **19.09.2014**

(51) Int Cl.:
***C04B 26/02*** *(2006.01)* ***C08F 20/06*** *(2006.01)*
***C04B 40/02*** *(2006.01)* ***C08K 5/00*** *(2006.01)*
***C04B 111/00*** *(2006.01)*

(86) Internationale Anmeldenummer:
**PCT/EP2014/069955**

(87) Internationale Veröffentlichungsnummer:
**WO 2015/040143 (26.03.2015 Gazette 2015/12)**

(54) **DURCH FRONTALPOLYMERISATION AUSHÄRTBARER REAKTIONSHARZMÖRTEL UND VERFAHREN ZUR BEFESTIGUNG VON ANKERSTANGEN**

REACTION-RESIN MORTAR CURABLE BY HEAD TO TAIL POLYMERISATION AND METHOD FOR FIXING ANCHOR RODS

MORTIER À BASE DE RÉSINE RÉACTIVE DURCISSABLE PAR POLYMÉRISATION FRONTALE ET PROCÉDÉ DE FIXATION DE TIGES D'ANCRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.09.2013 EP 13185075**

(43) Veröffentlichungstag der Anmeldung:
**27.07.2016 Patentblatt 2016/30**

(73) Patentinhaber: **Hilti Aktiengesellschaft**
**9494 Schaan (LI)**

(72) Erfinder:
- **BÜRGEL, Thomas**
  **86899 Landsberg am Lech (DE)**
- **PFEIL, Armin**
  **86916 Kaufering (DE)**

(56) Entgegenhaltungen:
**EP-A1- 1 118 599** **EP-A1- 2 455 059**
**EP-A2- 1 273 617** **US-A- 5 326 843**

EP 3 046 886 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft einen durch Frontalpolymerisation aushärtbaren Reaktionsharzmörtel, mit mindestens einer radikalisch polymerisierbaren Verbindung, mindestens einer Thiol-funktionalisierten Verbindung und mindestens einem Polymerisationsinitiator, sowie ein Verfahren zur Befestigung von Ankerstangen, Betoneisen oder dergleichen in festen Unterlagen unter Verwendung dieses Reaktionsharzmörtels.

Zur Befestigung von Ankerstangen, Betoneisen oder ähnlichen Elementen in einem Bohrloch in mineralischen Untergründen, wie Beton- oder Mauerwerk, werden normalerweise Zweikomponenten-Reaktionsharzmörtel auf Basis von Methacrylaten oder Epoxidharzen verwendet. Diese Reaktionsharzmörtel weisen nach dem Vermischen der miteinander reagierenden Bestandteile eine gewisse Topfzeit auf, während der das zu befestigende Element gesetzt werden kann, und erreichen nach Ablauf einer weiteren Zeitspanne ihre Endfestigkeit. Die genannte Topfzeit liegt unter üblichen Bedingungen im Bereich einiger Minuten. Die Aushärtung erfolgt in der Regel innerhalb von einigen Minuten bis Stunden. In jedem Fall sind beide Effekte miteinander gekoppelt, d. h. eine längere Topfzeit führt zu einer längeren Aushärtungszeit, wobei diese Zeiten in Abhängigkeit von den Umgebungsbedingungen, namentlich der Temperatur, variieren können.

Aus der DE 39 40 309 A1 ist ein Reaktionsharzmörtel zur Befestigung von Verankerungen bekannt, der radikalisch härtbare Vinylesterurethane als Bindemittel enthält und Befestigungen mit hervorragender Beständigkeit und Festigkeit liefert.

Gegenstand der DE 42 31 161 A1 ist ein Zweikomponenten-Reaktionsharzmörtel zur Befestigung von Verankerungsmitteln in Bohrlöchern mit einem Gehalt an härtbaren Verbindungen auf anorganischer und organischer Grundlage und Härtern, der aufgrund seines Gehaltes an hydraulisch abbindenden und/oder polykondensierbaren Verbindungen und an härtbaren Vinylestern eine außerordentlich günstige Lagerfähigkeit aufweist neben verringerter Schrumpfneigung, erhöhter Wärmeformbeständigkeit, verbessertem Brandverhalten, Beständigkeit gegen klimatische Bedingungen, höherer Verbundfestigkeit, günstigem Ausdehnungskoeffizienten, zufriedenstellendem Langzeitverhalten und hoher Temperaturwechselbeständigkeit.

Schließlich offenbart die DE 43 15 788 A1 Dübelharze zur Befestigung von Ankern in festen Körpern, die in einer Ampulle oder Kartusche vorliegen und als Bindemittel radikalisch nicht polymerisierbare Polymere, Reaktivverdünner mit mindestens zwei (Meth)acrylatgruppen, andere Reaktivverdünner, Reaktivverdünner mit einem Siedepunkt von 180°C, andere Polymere und ein nicht reaktives Lösungsmittel enthalten. Diese Dübelharze erlauben es, die im Stand der Technik üblichen, beziehungsweise erforderlichen Haltewerte zu erreichen, sind sicher in ihrer Handhabung, enthalten weniger giftige Komponenten und sind in ihren physikalischen Eigenschaften auf den jeweiligen Anwendungszweck anpassbar.

Da es auch bei Anwendung dieser Reaktionsharzmörtel beziehungsweise Dübelharze auf Baustellen kaum möglich ist, bei optimalen Bedingungen zu arbeiten, ergeben sich, wenn beispielsweise eine Vielzahl von Bohrlöchern zunächst mit diesen Reaktionsharzmörteln oder Dübelharzen beschickt wird und dann Befestigungselemente nacheinander eingeführt werden, unterschiedliche Zeiträume zwischen dem Ansetzen des aushärtenden Reaktionsharzmörtels beziehungsweise des Dübelharzes und der Einführung der Befestigungselemente, was zur vorzeitigem Aushärten des Reaktionsharzmörtels beziehungsweise des Dübelharzes führen kann, so dass das Bohrloch nicht mehr genutzt werden kann, was vor allem bei hohen Temperaturen (im Sommer) kritisch ist.

Zur Überwindung der Temperaturabhängigkeit von Topfzeit und/oder Aushärtungszeit schlägt das ältere deutsche Patent DE 100 02 367 C1 eine durch Frontalpolymerisation nach Wärmeinitiierung aushärtbaren Reaktionsharzmörtel vor, die neben einem polymerisierbaren Monomeren oder härtbaren Harz und gegebenenfalls mindestens einem Füllstoff einen bei einer Temperatur von oberhalb 30°C thermisch aktivierbaren und/oder thermisch freisetzbaren Polymerisationsinitiator für das Monomere und/oder einen Härtungsbeschleuniger für das härtbare Harz enthält, wobei Art und Menge von Monomeren beziehungsweise Harz und Polymerisationsinitiator beziehungsweise Härtungsbeschleuniger derart ausgewählt sind, dass sich nach dem Auslösen der Polymerisation eine Geschwindigkeit der Polymerisationsfront (Frontgeschwindigkeit) von mindestens 10 cm/min ergibt. Nachteilig an diesem System ist die unzureichende Lagerstabilität.

Um die Lagerstabilität dieses Systems zu erhöhen, aber dennoch ein sehr reaktives System bereitzustellen, schlägt die DE 101 32 336 A1 vor, als Polymerisationsinitiator ein organisch substituiertes Ammoniumpersulfat einzusetzen, welches lediglich in Form der erforderlichen Ausgangsmaterialien in getrennten Komponenten des Reaktionsharzmörtels vorliegt und erst beim Vermischen der wenigstens zwei Komponenten in situ in dem Reaktionsharzmörtel gebildet wird. Dabei enthält eine Komponente des Reaktionsharzmörtels mindestens ein organisch substituiertes Ammoniumsalz während eine andere Komponente mindestens ein anorganisches Persulfat enthält, welche in sehr schneller Reaktion das organisch substituierte Ammoniumpersulfat bilden, das dann als Initiator für die radikalische Härtung des Reaktionsharzmörtels zur Verfügung steht.

Sowohl der Reaktionsharzmörtel nach der DE 100 02 367 C1 als auch der nach der DE 101 32 336 A1 haben jedoch den Nachteil, dass es sich hierbei um extrem reaktive Systeme handelt, bei denen hohe Fronttemperaturen erreicht werden. Diese hohen Temperaturen führen zu merklicher Rauchentwicklung und einem Aufschäumen während

der Aushärtung. Es entstehen kritische Gase, welche auf Zersetzungsprodukte zurückzuführen sind. Außerdem wird bei diesen Systemen ein relativ starkes Aufschäumen der Massen bei der Aushärtung beobachtet. In Folge dessen wird ein wenig kompakter Feststoff erhalten, was sich negativ auf die Lastwerte auswirkt, so dass der Anwendungsbereich für diese Reaktionsharzmörtel eingeschränkt ist.

Die Erfinder haben herausgefunden, dass durch den Austausch der reaktiven Komponenten, insbesondere der reaktiven polymerisierbaren Verbindungen durch weniger reaktiven Verbindungen die Probleme nicht behoben werden konnten. Vielmehr wurde beobachtet, dass die Aushärtung unzureichend war und nicht selten die Polymerisationsfront zusammenbrach und dadurch die Aushärtung zum Erliegen kam, bevor der Reaktionsharzmörtel vollständig ausgehärtet war.

Die Aufgabe der vorliegenden Erfindung besteht nun darin, einen Reaktionsharzmörtel, der durch Frontalpolymerisation nach Wärmeinitiierung aushärtet, bereitzustellen, der die oben beschriebenen Nachteile nicht aufweist, der insbesondere weniger Rauchentwicklung und ein geringeres Aufschäumen zeigt, vollständig aushärtet und eine kompakte Masse nach dem Aushärtung des Reaktionsharzmörtels ergibt.

Es hat sich nunmehr überraschenderweise gezeigt, dass diese Aufgabe durch den Zusatz von Thiol-funktionalisierten Verbindungen gelöst werden kann. Hiermit ist es möglich, einen Reaktionsharzmörtel bereitzustellen, der, verglichen mit den aus der DE 100 02 367 C1 und der DE 101 32 336 A1 bekannten Systemen, weniger reaktiv ist, eine geringere Rauchentwicklung und ein vermindertes Aufschäumen aufweist, aber dennoch vollständig Aushärtet und zu einem kompakteren Polymeren führt.

Gegenstand der Erfindung ist daher ein durch Frontalpolymerisation aushärtbarer Reaktionsharzmörtel, umfassend mindestens eine radikalisch polymerisierbare Verbindung (a), mindestens eine Thiol-funktionalisierten Verbindung (b) und mindestens einem Polymerisationsinitiator (c), wobei das Gewichtsverhältnis der mindestens einen radikalisch polymerisierbaren Verbindung (a) und der mindestens einen Thiol-funktionalisierten Verbindung (b) im Bereich von 10:1 bis 2:1 liegt und wobei der Polymerisationsinitiator (c) unter Verbindungen, die bei einer Temperatur von oberhalb 30°C thermisch aktivierbar und/oder thermisch freisetzbar sind und/oder Ammoniumpersulfaten, die in situ aus mindestens einem organisch substituierten Ammoniumsalz und mindestens einem anorganischen Persulfat gebildet werden, ausgewählt ist, dadurch gekennzeichnet, dass der Polymerisationsinitiator (c) ein Peroxid und/oder eine Azoverbindung ist, die ggf. in Anwesenheit eines Polymerisationsbeschleunigers (d) jeweils eine Halbwertszeit ti/2 im Bereich zwischen 1 und 200 Minuten bei einer Temperatur von 100°C in Chlorbenzol haben, und dass die mindestens eine Thiol-funktionalisierte Verbindung (b) über mindestens zwei Thiolgruppen verfügt.

Der erfindungsgemäße Reaktionsharzmörtel härtet im Wesentlichen erst dann aus, wenn durch Wärmeinitiierung, d.h. durch punktuelles oder flächiges Erhitzen der Oberflächenschicht oder durch Erhitzen des Inneren des Reaktionsharzmörtels auf eine Temperatur von oberhalb 30°C, der thermisch aktivierbare und/oder thermisch freisetzbare Polymerisationsinitiator aktiv wird und die Polymerisation der härtbaren Verbindung auslöst. Hierdurch wird es möglich, eine praktisch beliebig lange Topfzeit des Mörtels zu erreichen und diese vollständig von der Aushärtungszeit zu trennen, da die Aushärtung erst durch die Wärmeinitiierung einsetzt. In dieser Weise wird es möglich, das zu befestigende Element gegebenenfalls noch Stunden nach der Einführung des Reaktionsharzmörtels in das Bohrloch zu setzen und zu justieren und die Aushärtung des Reaktionsharzmörtels durch kurzzeitiges Erhitzen der Mörteloberfläche innerhalb von Sekunden bis zu wenigen Minuten zu bewirken.

Unter Wärmeinitiierung ist dabei zu verstehen, dass die Polymerisationsreaktion des Reaktionsharzmörtels zu einem beliebigen Zeitpunkt, gegebenenfalls nach dessen Bildung durch das Vermischen der in getrennten Komponenten vorliegenden Bestandteile, durch Wärmezufuhr ausgelöst werden kann, so dass sich eine sehr lange Topfzeit des Reaktionsharzmörtels ergibt und deren Aushärtung gezielt zu einem gewünschten Zeitpunkt gestartet werden kann. Hierdurch wird es möglich, zunächst eine große Vielzahl von Bohrlöchern mit dem Reaktionsharzmörtel zu beschicken, anschließend die Befestigungselemente einzuführen, zu justieren und dann die Härtung zu initiieren, so dass es möglich wird, eine optimale und weitgehend identische Aushärtung und damit weitgehend identische Auszugsfestigkeit der montierten Befestigungselemente zu erreichen.

Schließlich ist es mit dem erfindungsgemäßen Reaktionsharzmörtel nicht nur möglich, die Frontalpolymerisation der Schwerkraft folgend abwärts zu bewirken, sondern auch in horizontaler bzw. vertikaler Richtung nach oben. In dieser Weise wird es durch entsprechende Einstellung der Viskosität des Reaktionsharzmörtels möglich, beispielsweise auch in Decken vorliegende, nach unten geöffnete Bohrlöcher mit dem Reaktionsharzmörtel zu füllen, die Befestigungselemente einzuführen und die Aushärtung durch Wärmeinitiierung auszulösen.

Hierbei erfolgt erfindungsgemäß die Auslösung der Polymerisation des Reaktionsharzmörtels vorzugsweise durch punktuelles oder flächiges Erhitzen der Oberflächenschicht mit Hilfe einer Flamme, einer Lötkolbenspitze, eines Heizdrahtes, der sich entweder über die gesamte Länge oder eines Teils der Länge des Befestigungselements erstreckt, eines Heißluftgebläses, eines Lichtblitzes/Laserstrahls, eines Induktionsofens oder dergleichen oder in situ durch eine chemische Reaktion oder aber durch Wärmeeintrag über ein wärmeleitendes Befestigungselement in das Innere des Reaktionsharzmörtels.

Alternativ ist es durch entsprechende Auswahl der Bestandteile des Reaktionsharzmörtels möglich, dass der

erfindungsgemäße Reaktionsharzmörtel ohne thermische Aktivierung nach einer gewissen Wartezeit auch spontan aushärtet. Der Erfinder hat herausgefunden, dass bei Anwesenheit eines Polymerisationsbeschleunigers (d) nach einer gewissen Zeit, die von der Konzentration des Polymerisationsbeschleunigers abhängig ist, eine Polymerisation des Reaktionsharzmörtels auch ohne vorherige Wärmeinitiierung einsetzt.

Zweckmäßig wird als radikalisch polymerisierbare Verbindung (a) eine Verbindung mit mindestens einer C-C-Doppelbindung eingesetzt, die radikalisch härten kann und aufgrund der ausbleibenden Homopolymerisation hinreichend lagerstabil ist.

Gemäß einer bevorzugten Ausführungsform der Erfindung ist die Verbindung mit mindestens einer reaktiven C-C-Doppelbindung eine Verbindung mit mindestens einer nicht-aromatischen C-C-Doppelbindung, wie (Meth)acrylat-funktionalisierte Verbindungen, Allyl-funktionalisierte Verbindungen, Vinyl-funktionalisierte Verbindungen, Norbornen-funktionalisierte Verbindungen und ungesättigte Polyester-Verbindungen.

Beispiele ungesättigter Polyester-Verbindungen sind dem Artikel von M. Maik et al. J. Macromol. Sci., Rev. Macromol. Chem. Phys. 2000, C40, 139-165 zu entnehmen, in dem eine Klassifikation solcher Verbindungen auf Basis ihrer Struktur getroffen wurde, wobei fünf Gruppen genannt werden: (1) Ortho-Harze, (2) Iso-Harze, (3) Bisphenol-A-fumarate, (4) Chlorendics, und (5) Vinylester-Harze. Davon können ferner noch die sogenannten Dicyclopentadien-(DCPD-) Harze unterschieden werden.

Weiter bevorzugt weist die Verbindung mit reaktiven Kohlenstoffmehrfachbindungen Allyl-, Vinyl-, (Meth)acryl-, Fumarsäure-, Maleinsäure-, Itaconsäure, Crotonsäure- oder Zimtsäure-Doppelbindungseinheiten auf oder ist die Verbindung mit reaktiven Kohlenstoffmehrfachbindungen ein Diels-Alder-Addukt oder ein Norbornen-Derivat davon oder ein Derivat davon mit einer anderen Verbindung, die bicyclische Doppelbindungen trägt. Beispielhafte Verbindungen sind Vinylester, Allylester, Vinylether, Allylether, Vinylamine, Allylamine, Vinylamide, Ester und Amide der (Meth)acrylsäure, Ester der Fumarsäure und Maleinimide.

Die erfindungsgemäß eingesetzten polymerisierbaren Monomere bzw. härtbaren Harze werden vorzugsweise ausgewählt aus: Acrylsäure, Methacrylsäure, Styrol, Divinylbenzol, Vinylacetat, Acrylamid, Übergangsmetallnitrat/Acrylamid-Komplexen; Acrylaten, wie Butylacrylat, 2-(2-Ethoxyethoxy)ethylacrylat (EOEOEA), Tetrahydrofurfurylacrylat (THFA), Laurylacrylat, Phenoxyethylacrylat, Isodecylacrylat, Tridecylacrylat, ethoxyliertem Nonylphenolacrylat, Isobornylacrylat (IBOA), ethoxyliertem Bisphenol A-diacrylat, Polyethylenglykoldiacrylat (PEGDA), alkoxyliertem Diacrylat, propoxyliertem Neopentylglykoldiacrylat (NPGPODA), ethoxyliertem Neopentylglykoldiacrylat (NPGEODA), Hexan-1,6-dioldiacrylat (HDDA), Tetraethylenglykoldiacrylat (TTEGDA), Triethylenglykoldiacrylat (TIEGDA), Tripropylenglykoldiacrylat (TPGDA), Dipropylenglykoldiacrylat (DPGDA), Ditrimethylolpropantetraacrylat (DiTMPTTA), Tris-(2-hydroxyethyl)-isocyanurattriacrylat (THEICTA), Dipentaerythritolpentaacrylat (DiPEPA), ethoxyliertem Trimethylolpropantriacrylat (TMPEOTA), propoxyliertem Trimethylolpropantriacrylat (TMPPOTA), ethoxyliertem Pentaerythritoltetraacrylat (PPTTA), propoxyliertem Glyceryltriacrylat (GPTA), Pentaerythritoltetraacrylat (PETTA), Trimethylolpropantriacrylat (TMPTA) und modifiziertem Pentaerythritoltriacrylat; Methacrylaten, wie Methylmethacrylat (MMA), Allylmethacrylat (AMA), Tetrahydrofurfurylmethacrylat (THFMA), Phenoxyethylmethacrylat, Isobornylmethacrylat, Triethylenglykoldimethacrylat (TIEGDMA), Ethylenglykoldimethacrylat (EGDMA), Tetraethylenglykoldimethacrylat (TTEGDMA), Polyethylenglykoldimethacrylat (PEGDMA), Butandioldimethacrylat (BDDMA), Diethylenglykoldimethacrylat (DEGDMA), Hexandioldimethacrylat (HDDMA), Polyethylenglykoldimethacrylat (PEG600DMA), Butylenglykoldimethacrylat (BGDMA), ethoxyliertem Bisphenol A-dimethacrylat, Trimethylolpropantrimethacrylat (TMPTMA); und/oder Oligomeren oder Präpolymeren, wie Bisphenol A-epoxyacrylat, epoxidiertem Sojabohnenoel-acrylat, Epoxy-Novolak-acrylat-Oligomeren, fettsäuremodifiziertem Bisphenol A-epoxyacrylat, aromatischem Monoacrylat-Oligomer, aliphatischem Diacrylat-Oligomer, tetrafunktionellem Epoxyacrylat, Amin-modifiziertem Polyetheracrylat-Oligomer, aliphatischem Urethantriacrylat, aliphatischem Urethantetraacrylat, aliphatischem Urethandiacrylat, hexafunktionelles aromatisches Urethanacrylat, aromatischem Urethandiacrylat, aromatischem Urethantetraacrylat und tetrafunktionellem Polyesteracrylat.

Die polymerisierbaren Monomere bzw. härtbaren Harze können alleine oder als Gemisch verwendet werden.

Der Reaktionsharzmörtel kann sofern erforderlich in einer Menge bis zu 10 Gew.-%, insbesondere bis 5 Gew.-% nicht reaktive Verdünnungsmittel, wie Niederalkylketone, z.B. Aceton, Diniederalkyl-niederalkanoylamide, wie Dimethylacetamid, Niederalkylbenzole, wie Xylole oder Toluol, Phthalsäureester oder Paraffine, oder Wasser, insbesondere ein Dialkylphthalat oder Dialkyladipat, und/oder Dimethylformamid, enthalten.

Zweckmäßig kann als Thiol-funktionalisierte Verbindung (b) jede Verbindung verwendet werden, welche über mindestens zwei Thiolgruppen verfügt. Jede Thiolgruppe ist dabei entweder direkt oder über einen Linker an ein Gerüst angebunden, wobei die Thiol-funktionalisierte Verbindung der vorliegenden Erfindung über irgendeines einer breiten Vielzahl von Gerüsten verfügen kann.

Das Gerüst kann ein Monomer, ein Oligomer oder ein Polymer sein.

In einigen Ausführungsformen der vorliegenden Erfindung umfassen die Gerüste Monomere, Oligomere oder Polymere mit einem Molekulargewicht (Mw) von 50.000 g/mol oder weniger, bevorzugt 25.000 g/mol oder weniger, stärker bevorzugt 10.000 g/mol oder weniger, noch stärker bevorzugt 5.000 g/mol oder weniger, noch stärker bevorzugt 2.000 g/mol oder weniger, und am stärksten bevorzugt 1.000 g/mol oder weniger.

Als Monomere, die die als Gerüste geeignet sind, können beispielhaft Alkandiole, Alkylenglykole, Zucker, mehrwertige Derivate davon oder Gemische davon und Amine, wie Ethylendiamin und Hexamethylendiamin, und Thiole erwähnt werden. Als Oligomere oder Polymere, die als Gerüste geeignet sind, können folgende beispielhaft erwähnt werden: Polyalkylenoxid, Polyurethan, Polyethylenvinylacetat, Polyvinylalkohol, Polydien, hydriertes Polydien, Alkyd, Alkydpolyester, (Meth)acrylpolymer, Polyolefin, Polyester, halogeniertes Polyolefin, halogenierter Polyester, Polymercaptan, sowie Copolymere oder Gemische davon.

In bevorzugten Ausführungsformen der Erfindung ist das Gerüst ein mehrwertiger Alkohol oder ein mehrwertiges Amin, wobei diese monomer, oligomer oder polymer sein können. Stärker bevorzugt ist das Gerüst ein mehrwertiger Alkohol.

Als mehrwertige Alkohole, die als Gerüste geeignet sind, können dabei folgende beispielhaft erwähnt werden: Alkandiole, wie Butandiol, Pentandiol, Hexandiol, Alkylenglykole, wie Ethylenglykol, Propylenglykol und Polypropylenglykol, Glycerin, 2-(Hydroxymethyl)propan-1,3-diol,1,1,1-Tris(hydroxymethyl)ethan, 1,1,1-Trimethylolpropan, Di(trimethylolpropan), Tricyclodecandimethylol, 2,2,4-Trimethyl-1,3-pentandiol, Bisphenol A, Cyclohexandimethanol, alkoxylierte und/oder ethoxylierte und/oder propoxylierte Derivate von Neopentylglykol, Tertraethylenglykolcyclohexandimethanol, Hexandiol, 2-(Hydroxymethyl)propan-1,3-diol, 1,1,1-Tris(hydroxymethyl)ethan, 1,1,1-Trimethylolpropan und Rizinusöl, Pentaerythritol, Zucker, mehrwertige Derivate davon oder Gemische davon.

Als Linker können beliebige Einheiten, welche geeignet sind, Gerüst und funktionelle Gruppe zu verbinden, verwendet werden. Für Thiol-funktionalisierte Verbindungen ist der Linker bevorzugt ausgewählt unter den Strukturen (I) bis (XI).

1: Bindung zur funktionellen Gruppe
2: Bindung zum Gerüst

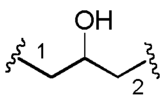
(I)
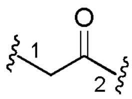
(II)
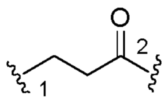
(III)
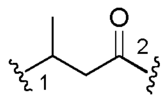
(IV)
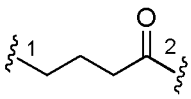
(V)
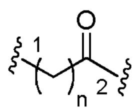
4 <= n <= 10
(VI)

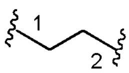
(VII)
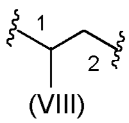
(VIII)
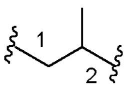
(IX)
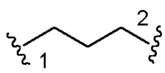
(X)
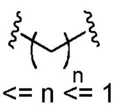
4 <= n <= 10
(XI)

Als Linker für Thiol-funktionalisierte Verbindungen besonders bevorzugt sind die Strukturen (I), (II), (III) und (IV).

Für Thiol-funktionalisierte Verbindungen ist die funktionelle Gruppe die Thiol-Gruppe (-SH).

Besonders bevorzugte Thiol-funktionalisierte Verbindungen sind Ester der $\alpha$-Thioessigsäure (2-Mercaptoacetate), $\beta$-Thiopropionsäure (3-Mercaptopropionate) und 3-Thiobuttersäure (3-Mercaptobutyrate) mit Monoalkoholen, Diolen, Triolen, Tetraolen, Pentaolen oder anderen Polyolen sowie 2-Hydroxy-3-mercaptopropylderivate von Monoalkoholen, Diolen, Triolen, Tetraolen, Pentaolen oder anderen Polyolen. Auch Gemische von Alkoholen können hierbei als Basis für die Thiol-funktionalisierte Verbindung verwendet werden. In dieser Hinsicht wird Bezug genommen auf die WO 99/51663 A1, deren Inhalt hiermit in diese Anmeldung aufgenommen wird.

Als besonders geeignete Thiol-funktionalisierte Verbindungen können beispielhaft erwähnt werden: Glykol-bis(2-mercaptoacetat), Glykol-bis(3-mercaptopropionat), 1,2-Propylenglykol-bis(2-mercaptoacetat), 1,2-Propylenglykol-bis(3-mercaptopropionat), 1,3-Propylenglykol-bis(2-mercaptoacetat), 1,3-Propylenglykol-bis(3-mercaptopropionat), Tris(hydroxymethyl)methan-tris(2-mercaptoacetat), Tris(hydroxymethyl)methan-tris(3-mercaptopropionat), 1,1,1-Tris(hydroxymethyl)ethan-tris(2-mercaptoacetat), 1,1,1-Tris(hydroxymethyl)ethan-tris(3-mercaptopropionat), 1,1,1-Trimethylolpropan-tris(2-mercaptoacetat), ethoxyliertes 1,1,1-Trimethylolpropan-tris(2-mercaptoacetat), propoxyliertes 1,1,1-Trimethylolpropan-tris(2-mercaptoacetat), 1,1,1-Trimethylolpropan-tris(3-mercaptopropionat), ethoxyliertes 1,1,1-Trimethylolpropan-tris(3-mercaptopropionat), propoxyliertes Trimethylolpropan-tris(3-mercaptopropionat), 1,1,1-Trimethylolpropan-tris(3-mercaptobutyrat), Pentaerythritol-tris(2-mercaptoacetat), Pentaerythritol-tetrakis(2-mercaptoacetat), Pentaerythritol-tris(3-mercaptopropionat), Pentaerythritol-tetrakis(3-mercaptopropionat), Pentaerythritol-tris(3-mercaptobutyrat), Pentaerythritol-tetrakis(3-mercaptobutyrat), Capcure® 3-800 (BASF), GPM-800 (Gabriel Performance Products), Capcure® LOF (BASF), GPM-800LO (Gabriel Performance Products), KarenzMT PE-1 (Showa Denko), 2-Ethylhexylthioglykolat, *iso*-Octylthioglykolat, Di(*n*-butyl)thiodiglykolat, Glykol-di-3-mercaptopropionat, 1,6-Hexandithiol,

Ethylenglykol-bis(2-mercaptoacetat) und Tetra(ethylenglykol)dithiol.

Die Thiol-funktionalisierte Verbindung kann alleine oder als Gemisch von zwei oder mehreren, unterschiedlichen Thiol-funktionalisierten Verbindungen eingesetzt werden.

Erfindungsgemäß beträgt das Gewichtsverhältnis der mindestens einen radikalisch polymerisierbaren Verbindung (a) und der mindestens einen Thiol-funktionalisierten Verbindung (b) 10:1 bis 2:1, bevorzugt 8:1 bis 3:1.

Der Reaktionsharzmörtel enthält 10 bis 98 Gew.-%, bevorzugt 30 bis 80% eines Gemisches aus der mindestens einen radikalisch polymerisierbaren Verbindung (a) und der mindestens einen Thiol-funktionalisierten Verbindung (b) im oben angegeben Gewichtsverhältnis.

Die hierin verwendete Massenangabe Gew.-% bezieht sich, sofern nichts anderes angegeben ist, immer auf das Gesamtgewicht des Reaktionsharzmörtels.

Die Aushärtung des erfindungsgemäßen Reaktionsharzmörtels erfolgt durch radikalische Polymerisation. Die bei dieser Polymerisation eingesetzten Polymerisationsinitiatoren (c) sind Verbindungen, die - ggf. in Mischung mit einem Katalysator oder Aktivator als Polymerisationsbeschleuniger (d) - bei einer Temperatur oberhalb 30°C thermisch aktiviert und/oder thermisch freigesetzt werden, so dass sie dann die Aushärtung der polymerisierbaren Verbindungen bewirken.

Der Polymerisationsinitiator (c) sollte eine Halbwertszeit $t_{1/2}$ im Bereich zwischen 1 und 200 Minuten, bevorzugt zwischen 1 und 120 Minuten bei einer Temperatur von 100°C in Chlorbenzol haben. Die Halbwertszeit $t_{1/2}$ ist die Zeit, in der bei gegebener Temperatur die Hälfte des Polymerisationsinitiators (c) zerfallen ist. Informationen über die Zersetzungsrate von Polymerisationsinitiatoren bei verschiedenen Temperaturen sind von den Herstellern der Polymerisationsinitiatoren erhältlich oder können von einem Fachmann bestimmt werden. Ein alternativer Weg ist ferner eine Abschätzung der Halbwertszeit $t_{1/2}$ aus Literaturwerten für den präexponentiellen Faktor A und die Aktivierungsenergie $E_A$, welche im Allgemeinen ebenfalls von den Herstellern der Polymerisationsinitiatoren erhältlich sind, über die folgende Formel:

$$t_{\frac{1}{2}} = \frac{\ln 2}{A} \cdot e^{\frac{-E_A}{RT}}$$

Polymerisationsinitiatoren (c) sind Peroxide, insbesondere Dialkylperoxide, wie Di-*tert*-butylperoxid, Diacylperoxide, wie Dibenzoylperoxid, Hydroperoxide, wie tert-Butylhydroperoxid oder Cumolhydroperoxid, Percarbonsäureester, wie Butylperbezoat, Perketale, wie 1,1-Di-tert-butyl-peroxy-3,3,5-trimethylcyclohexan, Natriumpersulfat, Kaliumpersulfat, ein ggf. organisch substituiertes Ammoniumpersulfat (z.B. Tetra-n-butylammoniumpersulfat) und/oder eine Azoverbindung, wie Azobisisobutyronitril, mit einer Halbwertszeit $t_{1/2}$ im Bereich zwischen 1 und 200 Minuten, bevorzugt 1 bis 120 Minuten, bei einer Temperatur von 100°C in Chlorbenzol. Diese Polymerisationsinitiatoren (c) können alleine oder als Gemisch verwendet werden.

Sinngemäß wird der Begriff der Halbwertszeit hier auch für die katalysierte Zersetzung des Polymerisationsinitiators (c) in der gegebenen Mischung verwendet.

Die Polymerisationsinitiatoren (c) können auch durch Einkapselung in Hüllmaterialien (z.B. durch Mikroverkapselung) derart phlegmatisiert werden, dass sie erst beim Erhitzen auf eine Temperatur oberhalb 30°C unter entsprechender Erweichung bzw. Abreaktion des Hüllmaterials aktiv bzw. freigesetzt werden.

Diese Polymerisationsinitiatoren (c) können alleine oder als Gemisch verwendet werden.

Der Polymerisationsinitiator (c) kann in einer Menge von 2 bis 30 Gew.-%, bevorzugt 2 bis 12 Gew.-%, stärker bevorzugt 5 bis 10 Gew.-% in dem Reaktionsharzmörtel enthalten sein. Wird ein Gemisch von Polymerisationsinitiatoren verwendet, so liegt die Gesamtmenge der Polymerisationsinitiatoren im eben genannten Bereich.

Zur Beschleunigung der Polymerisation kann dem Reaktionsharzmörtel auch ein Polymerisationsbeschleuniger (d) für den Zerfall des Polymerisationsinitiators (c) zugegeben werden. Dadurch verkürzt sich dessen Halbwertszeit so dass Peroxide verwendet werden können, die ohne Beschleuniger eine Halbwertszeit bei 100°C von mehr als 200 min aufweisen.

Geeignete Polymerisationsbeschleuniger (d) sind insbesondere Amine, vorzugsweise ein tertiäres Amin, wie Dimethylanilin, Bis-(hydroxyethyl)-m-toluidin o.ä. und/oder Metallverbindungen, wie eine Kobalt-, Mangan-, Kupfer-, Eisen- und/oder Vanadiumverbindung.

Um ein vorzeitiges Auslösen der Polymerisation durch Wärmeeintrag von außen zu vermeiden, kann dem Reaktionsharzmörtel in einer zweiten Komponente, in verkapselter Form (z.B. Mikroverkapselung) und/oder anderweitig phlegmatisiert ein Katalysator zur Aktivierung des Polymerisationsinitiators zugegeben werden.

Ein besonderes Beispiel ist die Fixierung des Polymerisationsbeschleunigers (d) an ein Polymer, welches oberhalb der Grenztemperatur von mindestens 30°C ein die Zersetzung eines Peroxid-Polymerisationsinitiators auslösendes Metall, wie Kobalt, Mangan, Kupfer, Eisen und oder Vanadium freisetzt. Entsprechend kann man durch geeignete und dem Fachmann bekannte Kombination von Polymerisationsinitiatoren (c) und Polymerisationsbeschleunigern (d) bzw. Härtungsbeschleunigern mit entsprechenden Inhibitoren die gewünschte Auslösetemperatur von oberhalb 30°C

gezielt einstellen.

Der Polymerisationsbeschleuniger (d) kann in einer Menge von 0 bis 1 Gew.-%, bevorzugt 0,1 bis 0,5 Gew.-% in dem Reaktionsharzmörtel enthalten sein.

In einer bevorzugten Ausführungsform der Erfindung enthält der erfindungsgemäße Reaktionsharzmörtel ferner einen organischen und/oder anorganischen Zuschlagstoff, wie Füllstoffe und/oder weitere Additive, zur Beeinflussung diverser Eigenschaften der Massen.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerd- oder Portlandzement), Metalle, wie Aluminium, Ruß, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 10 mm.

Weitere denkbare Additive sind ferner Thixotropiermittel, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich.

Die anorganischen und/oder organischen Zuschlagstoffe können in dem Reaktionsharzmörtel in einer Menge von bis zu 60 Gew.-% enthalten sein.

Gemäß einer bevorzugten Ausführungsform der Erfindung enthält der Reaktionsharzmörtel 10 bis 98 Gew.-% eines Gemisches aus mindestens einer radikalisch polymerisierbaren Verbindung (a) und mindestens einer Thiol-funktionalisierten Verbindung (b) in einem Gewichtsverhältnis von 10:1 bis 2:1, bevorzugt 8:1 bis 3:1, 2 bis 12 Gew.-% mindestens eines Polymerisationsinitiators (c), 0 bis 1 Gew.-% mindestens eines Polymerisationsbeschleunigers (d), 0 bis 60 Gew.-% mindestens eines anorganischen und/oder organischen Zuschlagstoffes (e) und 0 bis 10 Gew.-% mindestens eines Lösungs- oder Verdünnungsmittels (f).

Gemäß einer weiter bevorzugten Ausführungsform der Erfindung enthält der Reaktionsharzmörtel 30 bis 80 Gew.-% eines Gemisches aus mindestens einer radikalisch polymerisierbaren Verbindung (a) und mindestens einer Thiol-funktionalisierten Verbindung (b) in einem Gewichtsverhältnis von 10:1 bis 2:1, bevorzugt 8:1 bis 3:1, 5 bis 10 Gew.-% mindestens eines Polymerisationsinitiators (c), 0 bis 0,5 Gew.-% eines Polymerisationsbeschleunigers (d), 20 bis 60% Gew.-% mindestens eines anorganischen und/oder organischen Zuschlagstoffes (e) und 0 bis 10 Gew.-% mindestens eines Lösungs- oder Verdünnungsmittels (f).

Die Anteile der Bestandteile werden so gewählt, dass sich die Gew.-% zu jeweils 100 Gew.-% addieren.

Der erfindungsgemäße Reaktionsharzmörtel kann ein- oder mehrkomponentig formuliert werden. Im Falle der einkomponentigen Form müssen die Komponenten so gewählt werden, dass eine Aushärtung des Reaktionsharzmörtels erst nach Wärmezufuhr erfolgt. Hinsichtlich einer besseren Lagerstabilität ist jedoch bevorzugt, den erfindungsgemäßen Reaktionsharzmörtel mehrkomponentig, insbesondere zweikomponentig zu formulieren. Ebenso ist für den Reaktionsharzmörtel die mehrkomponentige Form, insbesondere zweikomponentige Form bevorzugt, wenn als Polymerisationsinitiator ein organisch substituiertes Ammoniumpersulfat verwendet werden soll. Dabei enthält eine Komponente des Reaktionsharzmörtels mindestens ein organisch substituiertes Ammoniumsalz während eine andere Komponente mindestens ein anorganisches Persulfat enthält, welche in sehr schneller Reaktion das organisch substituierte Ammoniumpersulfat bilden sobald die Komponenten miteinander vermischt werden, das dann als Initiator für die radikalische Härtung des Reaktionsharzmörtels zur Verfügung steht.

Ein weiterer Gegenstand der Erfindung ist ein Verfahren zur Befestigung von Ankerstangen, Betoneisen oder dergleichen in Bohrlöchern in unterschiedlichen mineralischen Untergründen, welches darin besteht, den oben beschriebenen erfindungsgemäßen Reaktionsharzmörtel in das Bohrloch einzubringen. Anschließend wird die Ankerstange, das Betoneisen oder ein ähnliches Befestigungselement in das mit dem Reaktionsharzmörtel beschickte Bohrloch eingeführt, worauf die Frontalpolymerisation durch Erhitzen des Reaktionsharzmörtels auf eine Temperatur oberhalb der Reaktionstemperatur des Polymerisationsinitiators und/oder des Polymerisationsbeschleunigers ausgelöst wird.

Hierbei kann, falls der Reaktionsharzmörtel in zwei- oder mehrkomponentiger Form vorliegt, das Vermischen der Komponenten des Reaktionsharzmörtels z.B. mittels eines Statikmischers erfolgen. Bei Verwendung eines Ammoniumpersulfats als Polymerisationsinitiator wird dann das organisch substituierte Ammoniumsalz, welches in einer Komponente des Reaktionsharzmörtels enthalten ist, mit dem anorganischen Persulfat, das in der mindestens einen weiteren Komponente des Reaktionsharzmörtels enthalten ist, spontan in situ zu dem entsprechenden organisch substituierten

Ammoniumpersulfat ausreagiert, so dass ein durch Hitzeeinwirkung radikalisch polymerisierbarer Reaktionsharzmörtel entsteht.

Dabei kann die Polymerisation des Reaktionsharzmörtels durch punktuelles oder flächiges Erhitzen der Oberflächenschicht oder im Inneren des Reaktionsharzmörtels ausgelöst werden. Während es möglich ist, den Reaktionsharzmörtel durch Wärmeeintrag über ein wärmeleitendes Befestigungselement auszulösen, ist es erfindungsgemäß bevorzugt, ein punktuelles oder flächiges Erhitzen der Oberflächenschicht des Reaktionsharzmörtels mit Hilfe einer Flamme, einer Lötkolbenspitze, eines Heißluftgebläses, eines Heizdrahtes, der sich entweder über die gesamte Länge oder eines Teils der Länge des Befestigungselements erstreckt, eines Lichtblitzes, eines Laserstrahls, eines Induktionsofens und/oder mit Hilfe einer chemischen Reaktion in situ zu bewirken.

Ferner ist es möglich, die Wärmeinitiierung des Reaktionsharzmörtels durch Wärmeeintrag über ein wärmeleitendes Befestigungselement zu bewirken, sei es durch Wärmeleitung, durch Widerstandsheizung oder aber mit Hilfe eines z. B. über das Befestigungselement eingestrahlten Energiefeldes, wie eines elektrischen, magnetischen oder elektromagnetischen Feldes, beispielsweise durch Mikrowellenstrahlung.

Bei der Durchführung des erfindungsgemäßen Verfahrens erfolgt die Auswahl der Dimensionen von Bohrloch und Ankerstange entsprechend dem Stand der Technik für Injektionssysteme. Dabei wird eine solche Menge des erfindungsgemäßen Reaktionsharzmörtels in das vorbereitete Bohrloch eingebracht, dass der Ringspalt nach dem Setzen des zu befestigenden Elements vollständig ausgefüllt ist. Erfindungsgemäß ist ein Justieren des Elements möglich, da der Reaktionsharzmörtel erst nach kurzzeitigem Erhitzen während einiger Sekunden auf mindestens 80°C aushärtet.

Der erfindungsgemäße Reaktionsharzmörtel eignet sich besonders zur chemischen Befestigung, insbesondere zur Verwendung in Dübelanwendungen in Hohlziegeln mit Siebhülse. Hier ist dadurch ist es insbesondere möglich, auch mit Frontgeschwindigkeiten unterhalb der in der DE 100 02 367 C1 beschriebenen 10 cm/min zu arbeiten.

In dieser Weise wird es möglich, durch eine vollständige und vor allem gleichmäßige Aushärtung des Reaktionsharzmörtels ohne viel Aufschäumen und Rauchentwicklung zu bewirken und damit eine kompakte ausgehärtete Masse zu erreichen, die zu verbesserten Eigenschaften führt.

Die folgenden Beispiele dienen der weiteren Erläuterung der Erfindung.

## BEISPIELE

*Messung der Fronttemperatur sowie der Frontgeschwindigkeit*

Die Messung der Fronttemperatur erfolgt in einem Reagenzglas mit einem Durchmesser von 6 mm. An zwei Messpunkten sind in geeignetem Abstand Thermoelemente vorgesehen, mit denen die Änderung der Temperatur gemessen werden kann. Der zu untersuchende Reaktionsharzmörtel wird bei Raumtemperatur (23°C) in das Reagenzglas eingebracht. Die Polymerisation des Reaktionsharzmörtels wird durch Zündung mittels Lötkolben bei ca. 200°C an einem Punkt der Mörteloberfläche ausgelöst. An den Messpunkten lässt sich die Temperatur bestimmen. Aus dem Quotienten aus dem Abstand der beiden Messpunkte und der Zeitdifferenz zwischen den Temperaturspitzen lässt sich die Frontgeschwindigkeit berechnen.

Die offene Zeit ist die Zeitspanne innerhalb derer der fertig gemischte Reaktionsharzmörtel bei Raumtemperatur verarbeitet werden kann. Für Mörtelmassen, die nicht spontan aushärten, kann dabei keine offene Zeit angegeben werden.

*Messung der Versagenslasten*

Zur Bestimmung der Versagenslasten der ausgehärteten Masse bohrt man in Hohl-Mauerziegel analog EN 791-1, aber mit einer Druckfestigkeit von ca. 35MPa Löcher mit einem Durchmesser von 16 mm und einer Tiefe von 85 mm und setzt Siebhülsen HIT-SC 16*85 der Fa. Hilti (**1**), wie sie schematisch in der **Fig. 1** dargestellt ist, mit einem Einsteckende (**2**) und einem offenen Ende (**3**) zum Befüllen der Siebhülse (**1**) mit dem Reaktionsharzmörtel und zur Aufnahme der Ankerstange ein, die gemäß Figur 1 leicht von einem Widerstandsdraht (Widerstandswert ca. 10 Ohm) (**4**) umwickelt sind. Nach Befüllen der Siebhülsen (**1**) mit dem Reaktionsharzmörtel werden Ankergewindestangen der Dimension M10 gesetzt und die Aushärtung durch kurzzeitiges Anlegen einer Spannung von ca. 12 V über den Heizdraht (**4**) gestartet. Man ermittelt die mittleren Versagenslasten durch zentrisches Ausziehen der Ankergewindestangen. Es werden jeweils drei Ankergewindestangen eingedübelt und nach zwei Stunden Aushärtung ihre Lastwerte bestimmt.

Die hierbei ermittelten Versagenslasten (kN) sind als Mittelwert in der nachfolgenden Tabelle 1 aufgeführt.

## Beispiele 1 bis 8

Beispiele 4, 6, 7 und 8 sind Vergleichsbeispiele.

Unter Anwendung der in der nachfolgenden Tabelle 1 angegebenen Bestandteile werden Reaktionsharzmörtel

hergestellt und die Fronttemperaturen und die Frontgeschwindigkeiten bei der Polymerisation sowie die Versagenslasten wie oben beschrieben bestimmt.

Aus den Ergebnissen wird deutlich, dass die Fronttemperaturen durch die Verwendung der Thiol-funktionalisierten Verbindungen zum Teil deutlich gesenkt werden konnten insbesondere bei den Beispielen 1 bis 8. Dies führt zu einem geringeren Aufschäumen und einer besseren Aushärtung der Massen. Dementsprechend konnten mit den erfindungsgemäßen Reaktionsharzmörteln höhere Versagenslasten erreicht werden als mit den Reaktionsharzmörteln gemäß den Vergleichsbeispielen. Ferner zeigen die Ergebnisse, dass es bei den erfindungsgemäßen Zusammensetzungen nicht mehr darauf ankommt, dass die Polymerisationsfront mit einer bestimmtem Geschwindigkeit fortschreiten muss, um eine hinreichende Aushärtung der Massen zur erreichen, wie dies bei den Massen gemäß der DE 100 02 367 C1. Es konnte also gezeigt werden, dass bei den erfindungsgemäßen Reaktionsharzmörteln eine gute Aushärtung nicht mehr von der Frontgeschwindigkeit abhängig ist.

**Tabelle 1:** Zusammensetzungen der Reaktionsharzmörtel Ergebnisse der Temperaturmessung der Polymerisationsfront

| | Vergleichs -beispiel 1 | Vergleichs-beispiel 2 | Beispiel 1 | Beispiel 2 | Beispiel 3 | Beispiel 4 | Beispiel 5 | Beispiel 6 | Beispiel 7 | Beispiel 8 |
|---|---|---|---|---|---|---|---|---|---|---|
| TMPTMA 1) | 10g | | 8,9 g | 8g | 6,7g | 16g | 8,9g | 13,3 g | | |
| CN 975 2) | 10g | 20g | 8,9g | 8g | 6,7g | 2g | | | 16,5 g | 13,3 |
| TMP(EO)TA 3) | | | | | | | 8,9 g | | | |
| | | | | | | | | | | |
| PETMP 4) | | | 2,2 g | 4 g | 6,7 g | 2 g | 2,2 g | | 3,3 g | 6,7 |
| TMPMP 5) | | | | | | | | 6,7 g | | |
| | | | | | | | | | | |
| Perkadox 20S 6) | 4 g | | 4 g | 4 g | 4 g | | 4 g | | | |
| TBAPS 7) | | | | | | 1,4 g | | | | |
| Butylperbenzoat | | | | | | | | 1,5 g | | |
| TMCH9) | | 1,6 g | | | | | | | 1,6 g | 1,6 g |
| Octa-Soligen Mn 8) | | | | | | | | 0,2 g | | |
| pyrogene Kieselsäure | 1,2 g | 1,2 g | 1,2 g | 1,2 g | 1,2 g | 2 g | 2 g | 1,2 g | 1,2 g | 1,2 g |
| | | | | | | | | | | |
| Ene: Thiol | --- | --- | 8:1 | 4:1 | 2:1 | 9:1 | 8:1 | 2:1 | 5:1 | 2:1 |
| | | | | | | | | | | |
| Halbwertszeit $t_{1/2}$ bei 100°C | 23 | 109 | 23 | 23 | 23 | 56 | 23 | 4 | 109 | 109 |
| Temperatur [°C] | 223 | 240 | 185 | 165 | 133 | 112 | 125 | 215 | 210 | 195 |
| offene Zeit [min] | n.a. | n.a. | n.a. | 120 | 60 | n.a. | n.a. | 8 | 75 | 45 |
| Frontgeschwindigkeit [cm/min] | 1,3 | 15 | 2 | 1,6 | 1,4 | 11 | 1,7 | 2,9 | 8 | 4 |

(fortgesetzt)

| | Vergleichs -beispiel 1 | Vergleichs-beispiel 2 | Beispiel 1 | Beispiel 2 | Beispiel 3 | Beispiel 4 | Beispiel 5 | Beispiel 6 | Beispiel 7 | Beispiel 8 |
|---|---|---|---|---|---|---|---|---|---|---|
| Versagenslast [kN] M10*80mm | **0,5** | **0,6** | **1,1** | **1,9** | **1,3** | **2,3** | **1,2** | **6,9** | **1,1** | **2,4** |

1) Trimethylolpropantrimethacrylat
2) hexafunktionelles aromatisches Urethanacrylatoligomer (Sartomer)
3) 9fach ethoxyliertes Trimethylolpropantriacrylat
4) Pentaerythritoltetra(3-mercaptopropionat)
5) Trimethylolpropantris(3-mercaptopropionat)
6) 20% Dibenzoylperoxid auf Gips (AkzoNobel Polymer Chemicals)
7) Tetrabutylammoniumperoxodisulfat
8) 10% Manganoctanoat (OMG Borchers)
9) 1,1-Di-(tert.-butylperoxy)-3,3,5-trimethylcyclohexan

**Patentansprüche**

1. Durch Frontalpolymerisation aushärtbarer Reaktionsharzmörtel, umfassend mindestens eine radikalisch polymerisierbare Verbindung (a), mindestens eine Thiol-funktionalisierte Verbindung (b) und mindestens einen Polymerisationsinitiator (c), wobei das Gewichtsverhältnis der mindestens einen radikalisch polymerisierbaren Verbindung (a) und der mindestens einen Thiol-funktionalisierten Verbindung (b) im Bereich von 10:1 bis 2:1 liegt und wobei der Polymerisationsinitiator (c) unter Verbindungen, die oberhalb von 30°C thermisch freisetzbar sind und/oder Ammoniumpersulfaten, die in situ aus mindestens einem organisch substituierten Ammoniumsalz und mindestens einem anorganischen Persulfat gebildet werden, ausgewählt ist,
**dadurch gekennzeichnet, dass** der Polymerisationsinitiator (c) ein Peroxid und/oder eine Azoverbindung ist, die ggf. in Anwesenheit eines Polymerisationsbeschleunigers (d) jeweils eine Halbwertszeit $t_{1/2}$ im Bereich zwischen 1 und 200 Minuten bei einer Temperatur von 100°C in Chlorbenzol haben, und
dass die mindestens eine Thiol-funktionalisierte Verbindung (b) über mindestens zwei Thiolgruppen verfügt.

2. Reaktionsharzmörtel nach Anspruch 1, der 10 bis 98 Gew.-% eines Gemisches aus der mindestens einen radikalisch polymerisierbaren Verbindung (a) und der mindestens einen Thiol-funktionalisierten Verbindung (b) enthält.

3. Reaktionsharzmörtel nach Anspruch 1 oder 2, der 2 bis 30 Gew.-% des Polymerisationsinitiators (c) enthält.

4. Reaktionsharzmörtel nach einem der vorhergehenden Ansprüche, der als Polymerisationsinitiator (c) ein Ammoniumpersulfat enthält, wobei das mindestens eine organisch substituierte Ammoniumsalz und das mindestens eine organische Persulfat reaktionsinhibierend getrennt vorliegen, so dass das organisch substituierte Ammoniumpersulfat erst nach deren Vermischen gebildet wird.

5. Reaktionsharzmörtel nach Anspruch 4, der als organisch substituiertes Ammoniumsalz ein Tri- oder Tetraalkyl-, -aryl-, oder -arylalkylammoniumhalogenid, -acetat, - (hydrogen)carbonat, -(hydrogen)phosphat, -(hydrogen)sulfat, -(meth)acrylat oder Mischungen dieser Verbindungen enthält.

6. Reaktionsharzmörtel nach Anspruch 4 oder 5, der als anorganisches Persulfat Ammonium-, Kalium- oder Natriumpersulfat oder Mischungen dieser Verbindungen enthält.

7. Reaktionsharzmörtel nach einem der vorhergehenden Ansprüche, welcher ferner einen Polymerisationsbeschleuniger (d) enthält.

8. Reaktionsharzmörtel nach einem der vorhergehenden Ansprüche, welcher ferner anorganische und/oder organische Zuschlagstoffe enthält.

9. Reaktionsharzmörtel nach Anspruch 8, wobei der Zuschlagstoff unter Füllstoffen und/oder Additiven ausgewählt ist.

10. Reaktionsharzmörtel nach Anspruch 9, wobei der Zuschlagstoff in einer Menge bis zu 60 Gew.-% enthalten ist.

11. Reaktionsharzmörtel nach einem der Ansprüche 7 bis 10, wobei der Polymerisationsbeschleuniger (d) unter Aminen, Sulfiden, Thioharnstoff oder Mercaptanen und/oder Metallverbindungen ausgewählt ist.

12. Reaktionsharzmörtel nach einem der Ansprüche 7 bis 11, wobei der Polymerisationsbeschleuniger (d) in einer Menge von 0,01 bis 1 Gew.-% enthalten ist.

13. Verfahren zur Befestigung von Ankerstangen, Betoneisen oder dergleichen in Bohrlöchern unterschiedlichen Untergrunds, wobei man den Reaktionsharzmörtel nach mindestens einem der vorhergehenden Ansprüche in das Bohrloch einbringt, die Ankerstange, das Betoneisen oder dergleichen einführt und die Frontalpolymerisation durch Erhitzen des Reaktionsharzmörtels auf eine Temperatur oberhalb der Reaktionstemperatur des Polymerisationsinitiators bzw. des Polymerisationsbeschleunigers auslöst.

14. Verfahren nach Anspruch 13 zur Befestigung von Ankerstangen, Betoneisen oder dergleichen in Hohluntergründen.

15. Verfahren nach Anspruch 13 oder 14, wobei die Polymerisation des Reaktionsharzmörtels durch punktuelles oder flächiges Erhitzen der Oberflächenschicht oder im Inneren der Mörtelmasse ausgelöst wird.

**16.** Verfahren nach einem der Ansprüche 13 bis 15, wobei die Polymerisation des Reaktionsharzmörtels durch Wärmeeintrag über das Befestigungselement ausgelöst wird.

**17.** Verfahren nach einem der Ansprüche 13 bis 16, wobei das punktuelle oder flächige Erhitzen mit Hilfe einer Flamme, einer Lötkolbenspitze, eines Heizdrahtes, eines Heißluftgebläses, eines Induktionsofens, eines Lichtblitzes, eines Laserstrahls und/oder in situ durch eine chemische Reaktion erfolgt.

**Claims**

**1.** Reaction resin mortar that may be hardened by frontal polymerisation, comprising at least one radically polymerisable compound (a), at least one thiol-functionalised compound (b) and at least one polymerisation initiator (c), in which the weight ratio of the at least one radically polymerisable compound (a) and the at least one thiol-functionalised compound (b) is in the range from 10:1 to 2:1 and in which the polymerisation initiator (c) is selected from compounds that may be thermally released above 30° C and/or ammonium persulfates that are formed in situ from at least one organically substituted ammonium salt and at least one inorganic persulfate,
**characterised in that** the polymerisation initiator (c) is a peroxide and/or an azo compound, which if necessary in the presence of a polymerisation accelerator (d) has a half-life $t_{1/2}$ in the range between 1 and 200 minutes at a temperature of 100° C in chlorobenzene, and
that the at least one thiol-functionalised compound (b) has at least two thiol groups.

**2.** Reaction resin mortar according to claim 1, which contains 10 to 98% by weight of a mixture made from at least one radically polymerisable compound (a) and the at least one thiol-functionalised compound (b).

**3.** Reaction resin mortar according to claim 1 or 2, which contains 2 to 30% by weight of the polymerisation initiator (c).

**4.** Reaction resin mortar according to one of the previous claims, which contains an ammonium persulfate as polymerisation initiator (c), in which the at least one organically substituted ammonium salt and the at least one organic persulfate are separated in a way that inhibits reaction, so that the organically substituted ammonium persulfate is only formed after they are mixed.

**5.** Reaction resin mortar according to claim 4, which contains a tri- or tetraalkyl, -aryl- or -arylalkylammonium halide, -acetate, -(hydrogen) carbonate, -(hydrogen) phosphate, -(hydrogen) sulfate, -(meth)acrylate or mixtures of these compounds as organically substituted ammonium salt.

**6.** Reaction resin mortar according to claim 4 or 5, which contains ammonium, potassium or sodium persulfate or mixtures of these compounds as inorganic persulfate.

**7.** Reaction resin mortar according to one of the previous claims, which also contains a polymerisation accelerator (d).

**8.** Reaction resin mortar according to one of the previous claims, which also contains inorganic and/or organic additional materials.

**9.** Reaction resin mortar according to claim 8, in which the additional material is selected from fillers and/or additives.

**10.** Reaction resin mortar according to claim 9, in which the additional material is contained in an amount of up to 60% by weight.

**11.** Reaction resin mortar according to one of claims 7 to 10, in which the polymerisation accelerator (d) is selected from amines, sulfides, thiourea or mercaptans and/or metal compounds.

**12.** Reaction resin mortar according to one of claims 7 to 11, in which the polymerisation accelerator (d) is contained in an amount of 0.01 to 1% by weight.

**13.** Method for fastening anchor rods, concrete iron bars or similar in holes of different substrates, in which the reaction resin mortar according to at least one of the previous claims is put into the hole, the anchor rod, concrete iron bar or similar is inserted and frontal polymerisation is triggered by heating the reaction resin mortar to a temperature above the reaction temperature of the polymerisation initiator or polymerisation accelerator.

14. Method according to claim 13 for fastening anchor rods, concrete iron bars or similar in hollow substrates.

15. Method according to claim 13 or14, in which polymerisation of the reaction resin mortar is triggered by selective or extensive heating of the surface layer or inside the mortar mass.

16. Method according to one of claims 13 to 15, in which polymerisation of the reaction resin mortar is triggered by heat input through the fastening element.

17. Method according to one of claims 13 to 16, in which selective or extensive heating is carried out using a flame, the tip of a soldering iron, a heating wire, a hot air blower, an induction furnace, a flash of light, a laser beam and/or by a chemical reaction in situ.

**Revendications**

1. Mortier de résine de réaction durcissable par polymérisation frontale, comportant au moins un composé polymérisable par voie radicalaire (a), au moins un composé thiol fonctionnalisé (b) et au moins un initiateur de polymérisation (c), dans lequel le rapport de poids du au moins un composé polymérisable par voie radicalaire (a) et du au moins un composé thiol fonctionnalisé (b) est dans la plage de 10:1 à 2:1, et dans lequel l'initiateur de polymérisation (c) est choisi parmi des composés qui peuvent être libérés thermiquement au-dessus de 30 °C et/ou des persulfates d'ammonium qui sont formés in situ à partir d'au moins un sel d'ammonium substitué organiquement et d'au moins un persulfate inorganique,
**caractérisé en ce que** l'initiateur de polymérisation (c) est un peroxyde et/ou un composé azoïque qui ont respectivement, éventuellement en présence d'un accélérateur de polymérisation (d), une période de demi-vie $t_{1/2}$ dans la plage entre 1 et 200 minutes à une température de 100 °C dans le chlorobenzène, et
le au moins un composé thiol fonctionnalisé (b) possède au moins deux groupes thiol.

2. Mortier de résine de réaction selon la revendication 1, contenant 10 à 98 % en poids d'un mélange constitué du au moins un composé polymérisable par voie radicalaire (a) et du au moins un composé thiol fonctionnalisé (b).

3. Mortier de résine de réaction selon la revendication 1 ou 2, contenant 2 à 30 % en poids de l'initiateur de polymérisation (c).

4. Mortier de résine de réaction selon l'une des revendications précédentes, contenant un persulfate d'ammonium en tant qu'initiateur de polymérisation (c), dans lequel le au moins un sel d'ammonium organiquement substitué et le au moins un persulfate organique sont présents séparément d'une manière inhibant la réaction, de sorte que le persulfate d'ammonium substitué organiquement est seulement formé après leur mélange.

5. Mortier de résine de réaction selon la revendication 4, contenant, en tant que sel d'ammonium organiquement substitué, un halogénure d'ammonium tri- ou tétra-alkyle, -aryle ou -arylalkyle, un acétate, un (hydrogéno)carbonate, un (hydrogéno)phosphate, un (hydrogéno)sulfate, un (méth)acrylate ou des mélanges de ces composés.

6. Mortier de résine de réaction selon la revendication 4 ou 5, contenant, en tant que persulfate inorganique, du persulfate d'ammonium, de potassium ou de sodium, ou des mélanges de ces composés.

7. Mortier de résine de réaction selon l'une des revendications précédentes, contenant en outre un accélérateur de polymérisation (d).

8. Mortier de résine de réaction selon l'une des revendications précédentes, contenant en outre des adjuvants inorganiques et/ou organiques.

9. Mortier de résine de réaction selon la revendication 8, dans lequel l'adjuvant est choisi parmi des charges et/ou des additifs.

10. Mortier de résine de réaction selon la revendication 9, dans lequel l'adjuvant est contenu en une quantité jusqu'à 60 % en poids.

11. Mortier de résine de réaction selon l'une des revendications 7 à 10, dans lequel l'accélérateur de polymérisation

(d) est choisi parmi des amines, des sulfides, des thio-urées ou des mercaptans et/ou des composés métalliques.

**12.** Mortier de résine de réaction selon l'une des revendications 7 à 11, dans lequel l'accélérateur de polymérisation (d) est contenu en une quantité de 0,01 à 1 % en poids.

**13.** Procédé pour fixer des tiges d'ancrage, des fers à béton ou analogue dans des trous percés de différents substrats, dans lequel le mortier de résine de réaction selon au moins une des revendications précédentes est introduit dans le trou percé, la tige d'ancrage, le fer à béton ou analogue est introduit et la polymérisation frontale est déclenchée en chauffant le mortier de résine de réaction à une température supérieure à la température de réaction de l'initiateur de polymérisation ou de l'accélérateur de polymérisation.

**14.** Procédé selon la revendication 13 pour la fixation de tiges d'ancrage, de fers à béton ou analogue dans des substrats creux.

**15.** Procédé selon la revendication 13 ou 14, dans lequel la polymérisation du mortier de résine de réaction est déclenchée en chauffant de manière ponctuelle ou étendue la couche de surface ou dans l'intérieur de la masse de mortier.

**16.** Procédé selon l'une des revendications 13 à 15, dans lequel la polymérisation du mortier de résine de réaction est déclenchée par rapport de chaleur via l'élément de fixation.

**17.** Procédé selon l'une des revendications 13 à 16, dans lequel le chauffage ponctuel ou étendu est réalisé à l'aide d'une flamme, d'une panne de fer à souder, d'un fil chauffant, d'un ventilateur d'air chaud, d'un four à induction, d'un flash de lumière, d'un faisceau laser et/ou par une réaction chimique in situ.

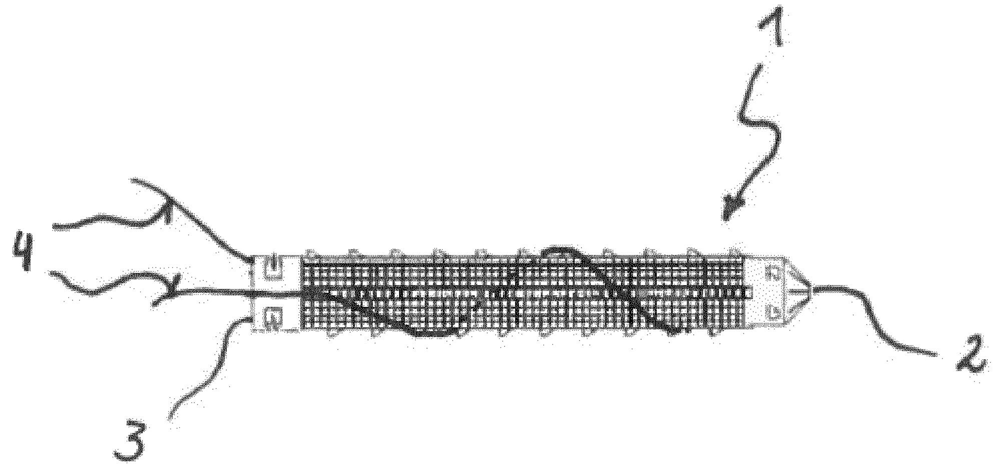


Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 3940309 A1
- DE 4231161 A1
- DE 4315788 A1
- DE 10002367 C1
- DE 10132336 A1
- WO 9951663 A1


### In der Beschreibung aufgeführte Nicht-Patentliteratur


- **M. MAIK et al.** J. Macromol. Sci. *Rev. Macromol. Chem. Phys.,* 2000, vol. C40, 139-165